# EUROPEAN PATENT APPLICATION

(11) **EP 1 902 955 A1**
(43) Date of publication of application: **26.03.2008**
(21) Application number: 05850023.2
(22) Date of filing: 22.12.2005
(51) Int. Cl.: B64G 1/24

(54) **ACCELERATION SYSTEM FOR MOVING DEVICES**

(30) Priority: 12.07.2005 ES 200501694
(71) Applicant: Centro de Investigacion de Rotacion y Torque Aplicada, S.L., 28049 Madrid (ES)
(72) Inventor: DORADO GONZÁLEZ, Manuel, E-28043 Madrid (ES); MONTERO CATALINA, Carlos, E-28922 Alcorcon, Madrid (ES); GARCÍA UREÑA, Javier, E-28918 Leganés, Madrid (ES); ANDREU SERRA, Jaime, E-28223 Pozuelo de Alarcon, Madrid (ES)
(74) Representative: Carvajal y Urquijo, Isabel
(86) International application number: PCT/ES2005/000700
(87) International publication number: WO 2007/006816

(57) **Abstract**

The invention relates to a system for accelerating moving bodies, **characterized by** the simultaneous application of two torques perpendicular to one another and in turn perpendicular to the moving body's own or induced angular momentum.

## Description

### Object of the Invention

The present invention relates to a new system for accelerating moving bodies. The present invention is comprised within the field of kinematics and physical dynamics.

### Background of the Invention

There are many systems on the market for accelerating a moving body but none like the one described in the present specification.

Most of these systems are based on combustion of materials in order to provide propulsion to the moving body, therefore a high consumption of energy is generally required.

No acceleration method and/or system for a moving body based on the joint application of 2 torques perpendicular to one another and in turn perpendicular to the angular momentum of the moving body has been described to date.

### Description of the Invention

The present invention relates to a system which allows accelerating moving devices having their own or an induced angular momentum.

A body in movement (moving body) having its own or an induced angular momentum is required in order to be able to apply this acceleration system. A pair of forces is applied on this moving body in order to generate a torque (1) perpendicular to the angular momentum of the moving body; a new pair of forces generating another torque (2) perpendicular to the previous one and also perpendicular to the angular momentum of the moving body will be needed. When this occurs the moving body experiences an acceleration.

Both torques (1) and (2) must act simultaneously so that the acceleration effect on the moving body occurs.

### Preferred Embodiment

The present invention is illustrated by means of the following example, which by no means limits its scope, which is exclusively defined by the claims.

### Acceleration of a Aerospatial Moving Device

A moving body, satellite or aircraft, having its own or an induced angular momentum is considered. 2 pairs of forces are applied, both of them perpendicular to one another and also perpendicular to the angular momentum of the moving body. The moving body will experience an acceleration upon simultaneously applying these pairs.

### Improving the Traction of a Vehicle

The wheels of a vehicle can be used as a moving element with its own angular momentum, such that an acceleration is generated by applying 2 pairs of forces on them, such that they are perpendicular to one another and also to the angular momentum,. It can be forced that the acceleration resulting from applying the effect is directed towards the surface on which the vehicle is moving, thus improving its traction.

## Claims

1. A system for accelerating moving bodies, **characterized by** the application of two torques perpendicular to one another and in turn perpendicular to the moving body's own or induced angular momentum.

2. A system for accelerating moving bodies, **characterized by** the application of two torques on a moving body with its own or an induced angular momentum, such that by vectorially separating the two applied torques and the angular momentum of the moving body on a base of orthogonal axes, the components of said vectors fulfilling that provided in claim 1 will be those causing the acceleration of the system.
